# EUROPEAN PATENT SPECIFICATION

(11) **EP 2 853 466 B1**
(45) Date of publication and mention of the grant of the patent: **25.04.2018**
(21) Application number: 14185052.9
(22) Date of filing: 17.09.2014
(51) Int. Cl.: B60Q 5/00, B61L 23/00, G10K 11/28

(54) **ACOUSTIC SIGNALING DEVICE OF A VEHICLE WITH PROTECTIVE MEANS**
AKUSTISCHE SIGNALÜBERTRAGUNGSVORRICHTUNG EINES FAHRZEUGS MIT SCHUTZMITTEL
DISPOSITIF DE SIGNALISATION ACOUSTIQUE D'UN VÉHICULE AVEC MOYENS DE PROTECTION

(30) Priority: 20.09.2013 RU 2013142971 U
(43) Date of publication of application: 01.04.2015
(73) Proprietor: Siemens Aktiengesellschaft, 80333 München (DE)
(72) Inventor: Pavlevich, Andrey, 125464 Moscow (RU)
(74) Representative: Isarpatent

(56) References cited:
- US-A- 2 299 447
- US-A- 2 910 956

## Description

The present invention relates to acoustic signaling devices used on vehicles, for example on railroad vehicles.
Acoustic signaling devices are known at the present time, and these are usually situated in the lower front part and lower rear part of a vehicle, such as a locomotive, under the windshield. When operated in severe weather conditions, for example during heavy snowfall, such acoustic signaling devices rapidly fail, since they become blocked with snow and cease to produce an acoustic signal. Many attempts have been made previously to solve this problem, for example by locating the acoustic signaling device within the vehicle, in order to prevent snow entering it. However, such placement proved ineffective due to the significant reduction in signal volume.
It has also previously been proposed that the problem of rain drops, snow, garbage or dirt entering the outlet orifice of an acoustic signaling device (horn) be solved by mounting a solid protective cap thereon. The JC Whithen company markets weather "shields" for horns (Hadley air horn weather shields), which are shown in a catalog available at http://www.jcwhitney.com/air-horn-weather-shields/p2009045.jcwx. Similar devices are also offered in the catalog of the Grover company, available at http://www.groverproducts.com/catalog.pdf and http://www.airhorns.com/products/aspx?category=accessories&it em=snow_shields (MRDS-Solutions Inc., 2006), which offers weather "shields" made in the form of solid convex caps.
However, installing a solid protective cap on the outlet orifice of an acoustic signaling device requires that considerble gaps be provided between the outlet orifice of the horn and the cap so as to permit discharge of air from the device. However, in the conditions of heavy snowfall which are typical of northern regions, the gaps between the cap and the acoustic signaling device also let in snow, which leads to blockage with snow and failure of the device.
US 2 229 447 A discloses a protective means for acoustic signaling device for a vehicle, to be mounted on the outlet orifice of the acoustic signaling device which comprises a mesh which essentially covers completely the outlet orifice of the acoustic signaling device.
The present invention is based on the object of creating a protective means which due to the presence of two meshes makes it possible to solve the problem of snow blockage of the outlet orifice of an acoustic signaling device.

The present invention provides an acoustic signaling device according to claim 1. Advantageous embodiments are disclosed in the dependent claims.
The technical result of this invention is thus the absence of snow blockage of the outlet orifice of an acoustic signaling device.
In accordance with a first aspect of the invention, said object is achieved by an acoustic signaling device of a vehicle, comprising a protective means mounted on the outlet orifice of the acoustic signaling device as defined by claim1. In use, the first mesh acts as a filter for snow, while the second mesh makes it possible to strengthen the structure and serves as a secondary filter, said meshes preferably being metallic. A protective means made from metal meshes can be mounted on the outlet orifice of an acoustic signaling device, covering it completely, since it eliminates the need to provide gaps for the discharge of air. Such a protective means will operate on the principle of an anti-avalanche barrier for installation on the sides of mountains with the object of preventing the destructive effect of an avalanche of snow.

The present invention is further described hereinafter with reference to illustrated embodiments shown in the accompanying drawings, in which:
- Fig. 1:: shows a side view of an acoustic signaling device (without a cap) and an acoustic signaling device with a prior art protective cap installed, and
- Fig. 2:: shows a side view in cross-section of an acoustic signaling device with a protective means in accordance with the claimed invention, and
- Fig. 3:: shows a top view of a protective device according to the invention, installed on the outlet orifice of an acoustic signal device, and
- Fig. 4:: shows a view in cross-section of a compartment of a vehicle with an acoustic signaling device installed therein and a protective means covering the entire compartment, and
- Fig. 5:: shows a top view of a protective device installed on a compartment of a vehicle containing an acoustic signaling device.

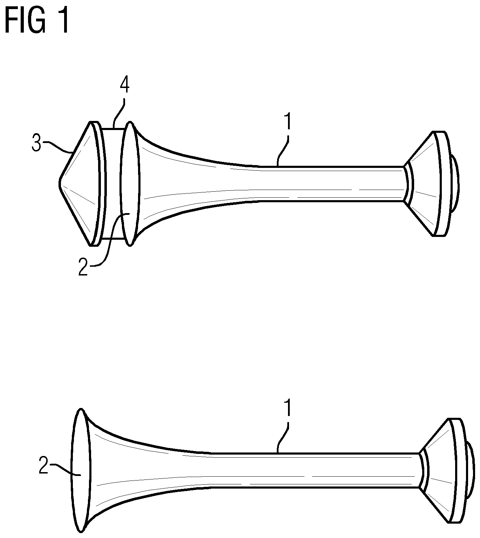

Figure 1 shows an acoustic signaling device according to the prior art. The device comprises horn (1) which has outlet aperture (2) for delivering an acoustic signal, with protective cap (3) mounted thereon. Protective cap (3) has a convex shape relative to the outlet orifice of the horn and is made solid. Protective cap (3) is mounted on the outlet orifice by means of fastening elements (4) such that it is positioned at a distance from the outlet orifice of the horn and provides gaps between the cap and the outlet orifice of the horn. However, the presence of such gaps on installation of the protective cap leads to blockage of the acoustic signaling device by snow in conditions of heavy snowfall.

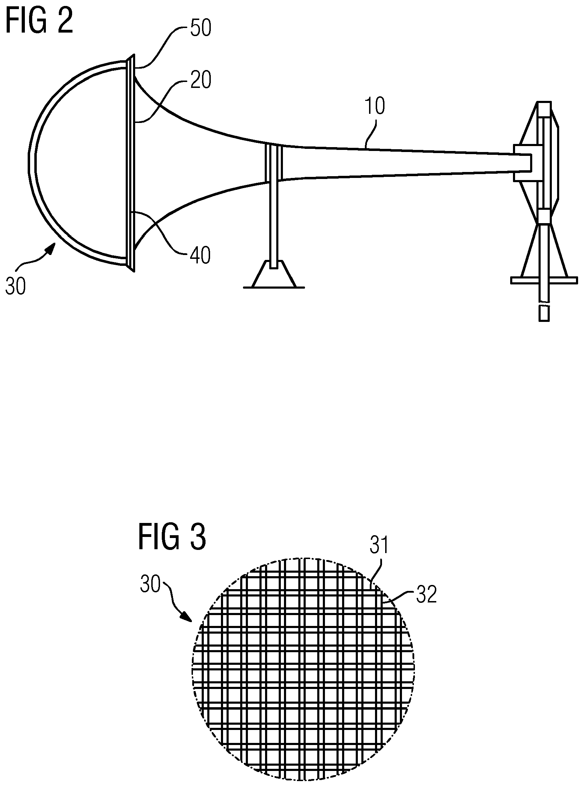

Figure 2 shows an embodiment of the invention as an example which does not limit the scope of patent protection. Protective means 30 for an acoustic signaling device is mounted on outlet orifice 20 of acoustic signaling device 10. In this embodiment, protective means 30 is mounted on outlet orifice 20 without a gap, essentially completely covering it. A person skilled in the art in this field will understand that a small gap may be present between protective means 30 and outlet orifice 20, but one which does not permit snow and other foreign substances to penetrate into the interior of the acoustic signaling device.
As a non-limiting example, Fig. 3 shows a top view of protective means (30) for mounting on the outlet orifice of an acoustic signaling device, comprising first (31) and second (32) meshes. In the embodiment shown, the first (31) and second (32) meshes are arranged such that one of them covers the other, the apertures of first mesh (31) and second mesh (32) having the same dimensions and being displaced relative to one another. In a preferred embodiment, second mesh (32) is situated above first mesh (31) and covers it. However, a person skilled in the art in this field will understand that the meshes may be arranged in a different order without impairing the protective properties of the claimed means.

In the embodiment shown in Fig. 2, first mesh (31) and second mesh (32) have apertures, the size of which is preferably not more than 2 mm. The snow retained by such apertures adheres to the mesh on the outer side, forming a "snow blanket" on the mesh which, however, does not prevent the discharge of air and an acoustic signal, since it is porous material. Second mesh (32) allows rigidity to be imparted to the structure, protects the device against external damage, and can serve as a secondary filter.

In this embodiment, the diameters of the strings or wire forming first mesh (31) and second mesh (32) are the same and are not more than 0.5 mm. It is clear that the diameters of the strings or wire forming the mesh may differ without having any marked effect on its protective properties.

In the embodiment shown, the meshes may be connected to one another and be mounted on an acoustic signaling device by means of metal ring (40) with a rubber seal and mounting clamps (50). However, it must be obvious to a person skilled in the art in this field that any other fixings may be emplowed to secure the protective means to the acoustic signaling device. The meshes may also where necessary be secured to one another in several locations over their area with a predetermined pitch in order to increase the strength of the structure.

In the non-limiting embodiment shown, protective means (30) is a convex cap or cover, mounted on the outlet orifice of the acoustic signaling device. However, it must be obvious to a person skilled in the art in this field that other embodiments of the protective means are possible which make it possible to close the acoustic signaling device against the entry thereto of snow and other foreign substances or items.

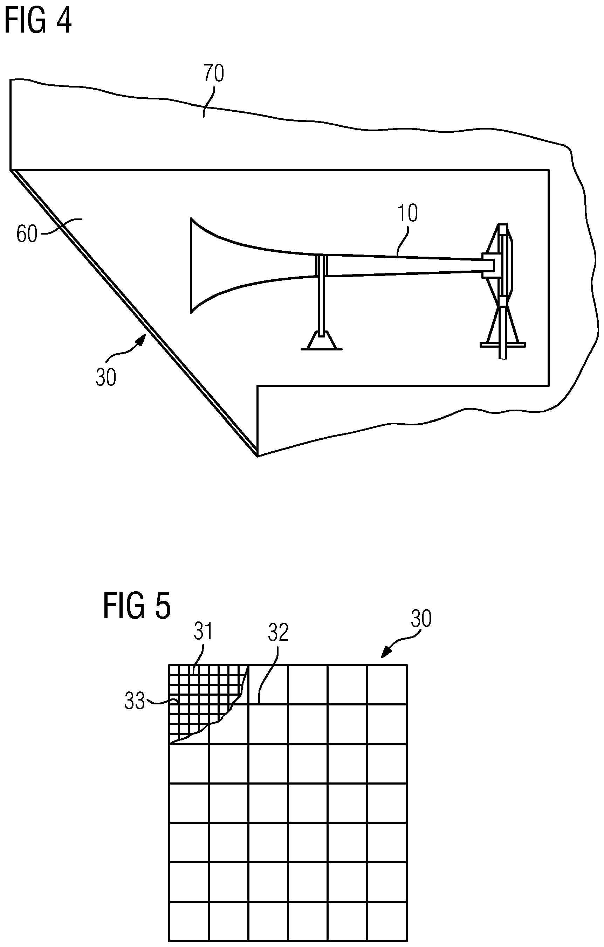

Figure 4 shows a non-claimed embodiment of protective device (30), which may be mounted on an entire compartment (60) of the body (70) of a vehicle in which are disposed acoustic signaling device (10) and appropriate equipment facilitating operation thereof (if it is located in an outer section of vehicle body (70)). The protective means is arranged such that it covers, essentially without gaps, the outlet orifice of the acoustic signaling device of the vehicle, thus preventing the entry of snow into said acoustic signaling device.
In the embodiment shown in Fig. 4, the protective device may be secured by means of mounting clamps to the compartment or bay of the vehicle holding the acoustic signaling device and optionally other additional equipment. However, it must be obvious to a person skilled in the art in this field that other known fastening means, such as clips, etc., may be used to mount the meshes on a vehicle compartment.

Figure 5 shows a top view of a non-claimed protective means for mounting on an entire compartment or bay of a vehicle. the protective means comprising first mesh (31), which for simplicity is shown only in partial view, and second mesh (32). First mesh (31) and second mesh (32) must be secured to each other by means of any known joining technology, such as spot welding, adhesive joining or interweaving, etc. In the non-limiting exemplary embodiment shown, first (31) and (32) meshes are interwoven and the joining locations are designated as item (33). It is preferable that second mesh (32) has wire/strings of a diameter which exceeds the diameter of the strings of first mesh (31). In the embodiment shown, first mesh (31) preferably has a string diameter of about 0.5 mm, while second mesh (32) has a string diameter of about 3 mm. It will be obvious to a person skilled in the art in this field that the diameters of the strings may be varied without having a significant effect on the technical properties of the entire protective means.

In the embodiment shown, the apertures of second mesh (32) are of larger size than the apertures of first mesh (31). Preferably, the size of the apertures of first mesh (31) is about 2 mm, while the size of the apertures of second mesh (32) is more than 10 mm, preferably more than 20 mm, which allows additional rigidity and strength to be imparted to the protective means. The embodiment presented here is only an example and it will be obvious to a person skilled in the art that the sizes of the apertures of the first and second meshes may also be altered, while providing reliable protection to the acoustic signaling device against snow and the required rigidity of the protective means structure.

In yet another non-claimed embodiment, a protective means mounted on a compartment or bay of a vehicle may also have a convex shape. However, it must be obvious to a person skilled in the art in this field that other embodiments of the protective means are possible which allow an acoustic signaling device to be fully protected against the ingress thereto of snow and other foreign substances or items.

## Claims

1. An acoustic signaling device (10) of a vehicle, comprising a protective means (30) mounted on the outlet orifice (20) of the acoustic signaling device (10) and which comprises a 5 first mesh (31) and a second mesh (32), the first mesh (31) and the second mesh (32) are arranged such that one of them covers the other, and such that each covers completely the outlet orifice (20) of the acoustic signalling device (10).

2. The acoustic signaling device (10) as claimed in claim 1, wherein the first and second meshes (31, 32) have apertures of the same size which are displaced relative to one another.

3. The acoustic signaling device (10) as claimed in claim 1, wherein the sizes of the apertures of the first and second meshes (31, 32) differ from one another, while the 15 meshes (31, 32) are secured to one another.

4. The acoustic signaling device (10) as claimed in claim 1, wherein the first and second meshes are metallic meshes.

5. The acoustic signaling device (10) as claimed in claim 2, wherein at least one of the dimensions of the apertures of the first mesh (31) and the second mesh (32) is not more than about 2 mm.

6. The acoustic signaling device (10) as claimed in claim 3, wherein at least one of the dimensions of the apertures of the second mesh (32) is more than about 10 mm.

7. The acoustic signaling device (10) as claimed in claim 3, wherein at least one of the dimensions of the apertures of the second mesh (32) is more than about 20 mm.

8. The acoustic signaling device (10) as claimed in claim 1, which additionally comprises a metallic ring (40) with a rubber seal for mounting on an acoustic signaling device (10).

9. The acoustic signaling device (10) as claimed in claim 1, which additionally comprises mounting clamps (50) for mounting on an acoustic signaling device (10).

10. The acoustic signaling device (10) as claimed in claim 1, wherein the diameters of the strings of the first mesh (31) and the second mesh (32) are essentially the same.

11. The acoustic signaling device (10) as claimed in claim 1, wherein the protective means (30) is a cap which is convexly curved relative to the outlet orifice (20) of the acoustic signaling device (10).

12. The acoustic signaling device (10) as claimed in claim 8, wherein the first and second meshes (31, 32) are metallic meshes.

13. The acoustic signaling device (10) as claimed in claim 8, wherein the diameter of the strings of the second mesh (32) exceeds the diameter of the strings of the first mesh (31).

## Patentansprüche

1. Akustische Signalübertragungsvorrichtung (10) eines Fahrzeugs, umfassend ein Schutzmittel (30), das an der Auslassöffnung (20) der akustischen Signalübertragungsvorrichtung (10) montiert ist und ein erstes Maschenmaterial (31) und ein zweites Maschenmaterial (32) umfasst, wobei das erste Maschenmaterial (31) und das zweite Maschenmaterial (32) so angeordnet sind, dass das eine von ihnen das andere bedeckt, und derart, dass jedes die Auslassöffnung (20) der akustischen Signalübertragungsvorrichtung (10) vollständig bedeckt.

2. Akustische Signalübertragungsvorrichtung (10) nach Anspruch 1, wobei das erste und das zweite Maschenmaterial (31, 32) Löcher mit derselben Größe aufweisen, welche relativ zueinander verschoben sind.

3. Akustische Signalübertragungsvorrichtung (10) nach Anspruch 1, wobei die Größen der Löcher des ersten und des zweiten Maschenmaterials (31, 32) sich voneinander unterscheiden, während die Maschenmaterialien (31, 32) aneinander befestigt sind.

4. Akustische Signalübertragungsvorrichtung (10) nach Anspruch 1, wobei das erste und das zweite Maschenmaterial metallische Maschenmaterialien sind.

5. Akustische Signalübertragungsvorrichtung (10) nach Anspruch 2, wobei mindestens eine der Dimensionen der Löcher des ersten Maschenmaterials (31) und des zweiten Maschenmaterials (32) nicht mehr als etwa 2 mm beträgt.

6. Akustische Signalübertragungsvorrichtung (10) nach Anspruch 3, wobei mindestens eine der Dimensionen der Löcher des zweiten Maschenmaterials (32) mehr als etwa 10 mm beträgt.

7. Akustische Signalübertragungsvorrichtung (10) nach Anspruch 3, wobei mindestens eine der Dimensionen der Löcher des zweiten Maschenmaterials (32) mehr als etwa 20 mm beträgt.

8. Akustische Signalübertragungsvorrichtung (10) nach Anspruch 1, die zusätzlich einen metallischen Ring (40) mit einer Gummidichtung zur Montage an einer akustischen Signalübertragungsvorrichtung (10) umfasst.

9. Akustische Signalübertragungsvorrichtung (10) nach Anspruch 1, die zusätzlich Montageklemmen (50) zum Montieren an einer akustischen Signalübertragungsvorrichtung (10) umfasst.

10. Akustische Signalübertragungsvorrichtung (10) nach Anspruch 1, wobei die Durchmesser der Fäden des ersten Maschenmaterials (31) und des zweiten Maschenmaterials (32) im Wesentlichen die gleichen sind.

11. Akustische Signalübertragungsvorrichtung (10) nach Anspruch 1, wobei das Schutzmittel (30) eine Kappe ist, die relativ zu der Auslassöffnung (20) der akustischen Signalübertragungsvorrichtung (10) konvex gekrümmt ist.

12. Akustische Signalübertragungsvorrichtung (10) nach Anspruch 8, wobei das erste und das zweite Maschenmaterial (31, 32) metallische Maschenmaterialien sind.

13. Akustische Signalübertragungsvorrichtung (10) nach Anspruch 8, wobei der Durchmesser der Fäden des zweiten Maschenmaterials (32) den Durchmesser der Fäden des ersten Maschenmaterials (31) übersteigt.

## Revendications

1. Dispositif de signalisation acoustique (10) d'un véhicule, comprenant un moyen de protection (30) monté sur l'orifice de sortie (20) du dispositif de signalisation acoustique (10) et qui comporte un premier treillis (31) et un deuxième treillis (32), le premier treillis (31) et le deuxième treillis (32) étant disposés de manière à ce que l'un d'eux couvre l'autre, et de manière à ce que chacun couvre complètement l'orifice de sortie (20) du dispositif de signalisation acoustique (10).

2. Dispositif de signalisation acoustique (10) selon la revendication 1, dans lequel le premier et le deuxième treillis (31, 32) ont des ouvertures de la même taille qui sont décalées l'une par rapport à l'autre.

3. Dispositif de signalisation acoustique (10) selon la revendication 1, dans lequel les tailles des ouvertures des premier et deuxième treillis (31, 32) diffèrent l'une de l'autre, tandis que les treillis (31, 32) sont fixés l'un à l'autre.

4. Dispositif de signalisation acoustique (10) selon la revendication 1, dans lequel le premier et le deuxième treillis sont des treillis métalliques.

5. Dispositif de signalisation acoustique (10) selon la revendication 2, dans lequel au moins une des dimensions des ouvertures du premier treillis (31) et du deuxième treillis (32) n'est pas plus qu'environ 2 mm.

6. Dispositif de signalisation acoustique (10) selon la revendication 3, dans lequel au moins une des dimensions des ouvertures du deuxième treillis (32) est plus qu'environ 10 mm.

7. Dispositif de signalisation acoustique (10) selon la revendication 3, dans lequel au moins une des dimensions des ouvertures du deuxième treillis (32) est plus qu'environ 20 mm.

8. Dispositif de signalisation acoustique (10) selon la revendication 1, qui comprend en outre une bague métallique (40) avec un joint en caoutchouc pour le montage sur un dispositif de signalisation acoustique (10).

9. Dispositif de signalisation acoustique (10) selon la revendication 1, qui comprend en outre des pinces de fixation (50) pour le montage sur un dispositif de signalisation acoustique (10).

10. Dispositif de signalisation acoustique (10) selon la revendication 1, dans lequel les diamètres des brins du premier treillis (31) et du deuxième treillis (32) sont essentiellement les mêmes.

11. Dispositif de signalisation acoustique (10) selon la revendication 1, dans lequel le moyen de protection (30) est un chapeau qui a une courbure convexe par rapport à l'orifice de sortie (20) du dispositif de signalisation acoustique (10).

12. Dispositif de signalisation acoustique (10) selon la revendication 8, dans lequel le premier et le deuxième treillis (31, 32) sont des treillis métalliques.

13. Dispositif de signalisation acoustique (10) selon la revendication 8, dans lequel le diamètre des brins du deuxième treillis (32) dépasse le diamètre des brins du premier treillis (31).
